# EUROPEAN PATENT APPLICATION

(11) **EP 3 190 352 A1**
(43) Date of publication of application: **12.07.2017**
(21) Application number: 16150577.1
(22) Date of filing: 08.01.2016
(51) Int. Cl.: F24J 2/05

(54) **HEAT RECEIVER TUBE WITH METALLIC SEALING, METHOD FOR MANUFACTURING THE HEAT RECEIVER TUBE, SOLAR COLLECTOR WITH THE HEAT RECEIVER TUBE AND METHOD FOR PRODUCING ELECTRICITY BY USING THE SOLAR COLLECTOR**

(71) Applicant: Siemens Concentrated Solar Power Ltd., 48091 Rosh Ha ayin (IL)
(72) Inventor: Klapwald, Shmulik, 9574627 Jerusalem (IL)
(74) Representative: Maier, Daniel Oliver

(57) **Abstract**

Heat receiver tube (1) for absorbing solar energy and for transferring absorbed solar energy to a heat transfer fluid (111) which can be located inside of at least one core tube (11) of the heat receiver tube (1). The core tube (11) comprises a core tube surface (112) with at least one solar energy absorptive coating (1121) for absorbing solar radiation (2). The core tube (11) is enveloped by at least one enveloping tube (10). The enveloping tube (10) comprises at least one enveloping tube wall (101) which is at least partly transparent for the solar radiation (2). The enveloping tube wall (101) comprises at least one inner enveloping tube surface (102). The core tube (11) and the enveloping tube (10) are coaxially arranged to each other such that an inner heat receiver tube space (3) is formed which is bordered by the core tube surface (112) and the inner enveloping tube surface (102). The inner heat receiver tube space (3) comprises an inert gas (5). The heat receiver tube (1) comprises at least one dimension adapting device (6) with a flexible adapting device wall (60) for compensation of a thermally induced change of at least one dimension of the heat receiver tube (1). The enveloping tube (10) and the dimension adapting device (6) are joined together by at least one heat receiver tube skirt (103) with at least one heat receiver tube skirt wall (1031). The heat receiver tube skirt wall (1031) comprises at least one inlet port (4) for pouring in of at least one inert gas (Xe or Kr) into the inner heat receiver tube space (3). The inlet port (4) is sealed by an inlet port sealing (40) for inhibiting a leakage of the inert gas (5) out of the inner heat receiver tube space (4). The inlet port sealing (4) comprises at least one metal (41).

## Description

### BACKGROUND OF THE INVENTION

### 1. Field of the invention

This invention relates to a heat receiver tube, a method for manufacturing the heat receiver tube, a solar collector with the heat receiver tube and a method for producing electricity by using of the solar collector.

### 2. Description of the related art

A sun energy collecting unit (solar collector) of a sun field power plant based on the concentrated solar power technique is for instance a solar collector with a parabolic mirror and a heat receiver tube. The heat receiver tube is arranged in a focal line of a solar radiation (sunlight) reflecting surface of the mirror. By the solar radiation reflecting surface sunlight is collected and focused to the heat receiver tube.

The heat receiver tube comprises a core tube (inner tube, e.g. made of stainless steel) which is filled with a heat transfer fluid, e.g. a thermo-oil or molten salt. With the aid of a solar radiation absorptive coating of the core tube the heat receiver tube absorbs energy from the sun. Energy from the sun is efficiently coupled into the heat transfer fluid. Solar energy is converted into thermal energy.

In order to minimize a loss of thermal energy, the heat receiver tube comprises an encapsulation with an enveloping tube. The enveloping tube envelops the core tube.

For instance, the enveloping tube is a glass tube. This enveloping tube is at least partly transparent for solar radiation. So, solar radiation can impinge the solar radiation absorptive coating of the core tube.

The core tube and the enveloping tube are coaxially arranged to each other resulting in an inner space of the heat receiver tube which is bordered by a core tube surface of the core tube and by an inner enveloping tube surface of an enveloping tube wall of the enveloping tube.

The inner space of the heat receiver tube between the inner tube and the enveloping tube is evacuated in order to minimize convection and hence in order to minimize a thermal loss of the heat receiver tube. The inner heat receiver tube space is a vacuum chamber.

One problem is a degradation of the heat transfer fluid during operation for years. By the degradation Hydrogen (H₂) results. This Hydrogen permeates through the stainless steel wall of the core tube into the evacuated inner space of the heat transfer tube. The result is a collapse of the vacuum of the inners space of the heat receiver tube and hence an increase of the thermal loss of the heat receiver tube.

One way to completely solve the described problem of installed hot heat receiver tubes is to replace them by new ones. But this solution is cost-intensive.

### SUMMARY OF THE INVENTION

It is an object of the invention to ensure low thermal loss during the operation of a heat receiver tube.

Further objects of the invention are the providing of a method for manufacturing the heat receiver tube, a solar collector with the heat receiver tube and a method for producing electricity by using the solar collector.

These objects are achieved by the invention specified in the claims.

With the invention a heat receiver tube for absorbing solar energy and for transferring absorbed solar energy to a heat transfer fluid which can be located inside of at least one core tube of the heat receiver tube is provided. The core tube comprises a core tube surface with at least one solar energy absorptive coating for absorbing solar radiation. The core tube is enveloped by at least one enveloping tube. The enveloping tube comprises at least one enveloping tube wall which is at least partly transparent for the solar radiation. The enveloping tube wall comprises at least one inner enveloping tube surface. The core tube and the enveloping tube are coaxially arranged to each other such that an inner heat receiver tube space is formed which is bordered by the core tube surface and the inner enveloping tube surface. The inner heat receiver tube space comprises an inert gas. The heat receiver tube comprises at least one dimension adapting device with a flexible adapting device wall for compensation of a thermally induced change of at least one dimension of the heat receiver tube. The enveloping tube and the dimension adapting device are joined together by at least one heat receiver tube skirt with at least one heat receiver tube skirt wall. Alternatively, the enveloping tube and the dimension adapting device are just covered by the heat receiver tube skirt. The heat receiver tube skirt wall comprises at least one inlet port for pouring in of at least one inert gas into the inner heat receiver tube space. The inlet port is sealed by an inlet port sealing for inhibiting a leakage of the inert gas out of the inner heat receiver tube space. The inlet port sealing comprises at least one metal.

In addition, a method for manufacturing a heat receiver tube with following steps is provided: a) providing of at least one precursor tube of the heat receiver tube, b) arranging of at least one inlet port in heat receiver tube skirt wall, c) pouring in of at least one inert gas into the inner heat receiver tube space of the heat receiver tube and d) sealing of the inlet port with the aid of a sealing.

Moreover, a solar collector is provided which comprises at least one mirror having a solar radiation reflecting mirror surface for directing the solar radiation to a focal line of the solar radiation reflecting mirror surface and at least one heat receiver tube which is arranged in the focal line of the solar radiation reflecting mirror surface. Preferably, the mirror is a parabolic mirror or a Fresnel mirror. The mirror is a parabolic mirror with a parabolic shaped solar radiation reflecting mirror surface. Alternatively the mirror is a Fresnel mirror. Thereby it is not necessary that the heat receiver tube is exactly located in the focal line of the mirror. Aberrations from an exact arrangement in the focal line are possible, too.

In addition, a method for producing electricity by using the solar collector in a solar thermal power plant for converting solar radiation into electrical energy, wherein an absorbing of the solar radiation is carried out with the aid of the solar collector.

In a preferred embodiment the inert gas is at least one noble gas which selected from the group consisting of Krypton and Xenon. Other gases or mixtures of different gasses are possible, too.

In order to keep the inert gas in the inner heat receiver space the inlet port is sealed with the aid of a sealing. So, after the pouring of the inert gas though the inlet port a sealing of the inlet port is carried out. With the aid of the sealing the loss of inert gas is avoided.

The inlet port sealing is a metallic inlet port sealing. This metallic inlet port sealing consists of a pure metal or consists of an alloy of various metals. In a preferred embodiment, the inlet port sealing comprises a welding. The inlet port is sealed by a welding.

The heat receiver tube skirt is a metal joint or a metal adapter between the enveloping tube and the dimension adapting device. The inlet port is arranged in the heat receiver tube skirt wall.

Preferably, the dimension adapting device comprises bellows and the flexible adapting device wall comprises a bellows wall. The bellows are preferably arranged at a front side of the heat receiver tube.

In a preferred embodiment, the inlet port comprises an inlet port dimension which is selected from the range between 0.02 mm and 1.5 mm and preferably selected from the range between 0.2 mm and 0.5 mm.

For instance, the inner core tube comprises a core tube wall which is made of stainless steel. The enveloping tube which is transparent for the sunlight (transmission for specific wavelengths more the 90%) is arranged coaxially around the inner core tube of the heat receiver tube. The enveloping tube is preferably made of glass. The enveloping tube wall comprises glass. But other transparent materials are possible, too.

The core tube surface and the inner enveloping tube surface are preferably oppositely arranged to each other. The result is a chamber which is filled with the inert gas.

In a preferred embodiment, a partial pressure of the inert gas in the inner heat receiver tube space is selected from the range between 5 mbar and 300 mbar and preferably between 100 mbar and 200 mbar. For instance, the inner space of the heat receiver tube is filled with Xe with a partial pressure of about 150 mbar. To achieve these partial pressures of the inert gas it is not necessary to evacuate the inner heat receiver tube space. An evacuation of the inner heat receiver tube space can be skipped.

Concerning the method for manufacturing of the heat receiver tube, the arranging of the inlet port comprises a drilling of a hole into heat receiver tube skirt wall.

Preferably, the sealing of the inlet port comprises a welding. The inlet port is sealed by a welding.

In a preferred embodiment for the drilling and/or for the welding at least one laser is used. The drilling of the hole comprises a laser drilling. The welding is carried out by laser welding.

Preferably, for the drilling and for the welding the same laser is used. So, it is not necessary to exchange the necessary laser equipment. Just settings of the laser for the specific applications (drilling of welding) have to be adapted.

In a preferred embodiment as a precursor heat receiver tube a receiver tube is used, which is installed in a solar field of a solar thermal power plant. Base on the invention the result a heat receiver tube with acceptable thermal features. It is not necessary to replace a hear receiver tube which is installed in a solar field of a solar thermal power plant.

Finally a use of the solar collector in a solar thermal power plant for converting solar energy into electrical energy is disclosed. Thereby an absorbing of the sunlight energy is carried out with the aid of the solar collector.

Solar radiation is converted into thermal energy of a heat transfer fluid which is located in the core tube. The heat transfer fluid is a thermo-oil or a molten salt. Via a heat exchanger thermal energy of the heat transfer fluid is used to produce steam. This steam drives a turbine which is connected to a generator. The generator produces current.

One specific advantage of the invention has to be noted: With the aid of the invention it is possible to maintain proper thermal characteristics of the heat receiver tube. It is not necessary to exchange the heat receiver tube after a couple of years of operation.

### BRIEF DESCRIPTION OF THE DRAWINGS

Further features and advantages of the invention are produced from the description of an exemplary embodiment with reference to the drawings. The drawings are schematic.

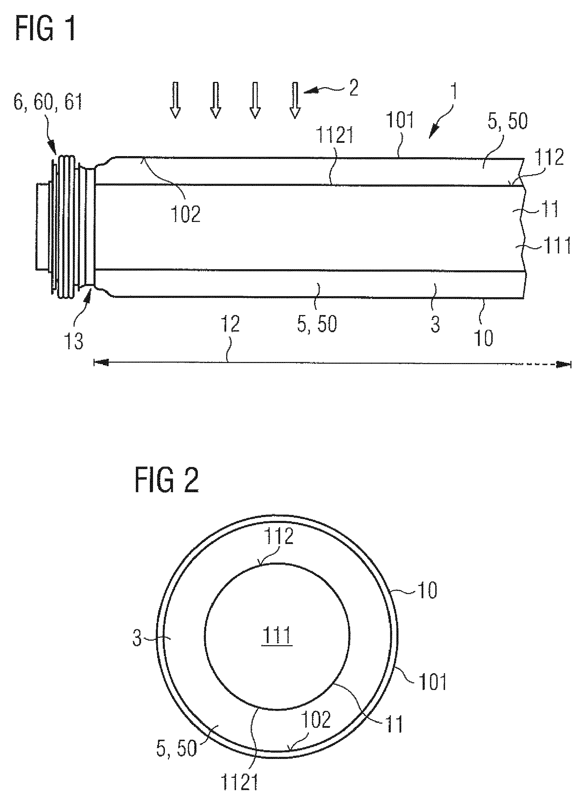

Figure 1 shows cross sections of a heat receiver tube.
Figure 2 shows a cross section perpendicular to figure 1.
Figure 3 shows a part of the heat receiver tube of figure 1.
Figure 4 shows a cross section of a parabolic through collector with the heat receiver tube.

### DETAILED DESCRIPTION OF THE INVENTION

Given is a heat receiver tube 1. The heat receiver tube 1 comprises a core tube 11 stainless steel. The core tube 11 comprises a core tube surface 112 with at least one solar energy absorptive coating for absorbing solar radiation 2 of the sunlight

In the core tube 11 a heat transfer fluid 111 can be located. The heat transfer fluid 111 is a thermo-oil. Alternatively the heat transfer fluid 111 is molten salt.

The enveloping tube 10 comprises an enveloping tube wall 101 out of glass. This enveloping tube wall is transparent for the solar radiation 2. The enveloping tube wall 101 comprises an inner enveloping tube surface 102, the external surface is coated by an AR layer (anti reflecting coating).

The core tube 11 and the enveloping tube 10 are coaxially arranged to each other. The core tube surface 112 and the inner enveloping tube surface 102 arranged face to face. By this an inner heat receiver tube space 3 results which is bordered by the core tube surface 112 and the inner enveloping tube surface 102.

The core tube 11 and the enveloping tube 10 are coaxially arranged to each other such that an inner heat receiver tube space 3 is formed which is bordered by the core tube surface 112 and the inner enveloping tube surface 102. At a front side 13 of the heat receiver tube 1 a dimension adapting device 6 with a flexible adapting device wall 60 for compensation of a thermally induced change of at least one dimension 12 of the heat receiver tube 1 is arranged. The dimension adapting device 6 are bellows 61 with a bellow walls 611.

The enveloping tube 10 and the dimension adapting device 6 are joined together by at least one heat receiver tube skirt 103 with at least one heat receiver tube skirt wall 1013. The heat receiver tube skirt wall 1031 comprises at least one inlet port 4 for pouring in of at least one inert gas 5 into the inner heat receiver tube space 3.

For the arranging of the inlet port into the heat receiver tube skirt wall a laser drilling of a hole into the heat receiver tube skirt is carried out.

The inlet port 4 is sealed by an inlet port sealing 40 for inhibiting a leakage of the inert gas 5 out of the inner heat receiver tube space 3. The inlet port sealing 4 is a welding. For the welding 4 a laser welding is carried out. The laser welding is carried out with the same laser which is used of the laser drilling. Alternatively, different lasers are used of the laser drilling and for the laser welding.

The inlet port dimension 401 of the inlet port 4 is in the range of 0.02mm - 1.5mm. The inert gas 5 is Xenon. In an alternative embodiment, the inert gas 5 is Krypton. A partial pressure of the inert gas is of about 150 mbar.

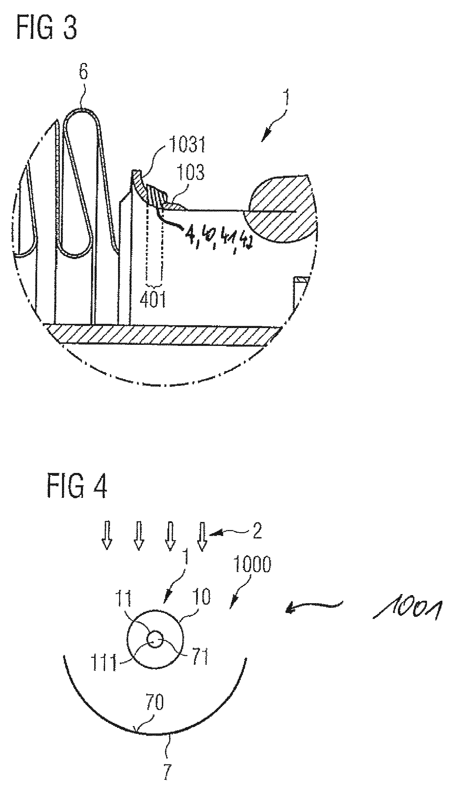

The heat receiver tube 1 is part of a solar collector 1000. The solar collector 1000 comprises at least one parabolic mirror 7 with a sunlight reflective surface 31. By the solar radiation reflecting surface 70 the sunlight 2 is directed to the focal line 71 of the parabolic mirror 7. The concentrated sunlight is absorbed by the heat receiver tube 1 (figure 4).

The heat receiver tube 1 is arranged on the side of the incoming direct sunlight radiation 2.

The solar collector 1000 is used for a solar field 1001 of a solar thermal power plant for converting solar energy into electrical energy. The heated heat transfer fluid is used to produce steam via a heat exchanger. The steam is driving a turbine, which is connected to a generator. The generator produces current (electrical energy).

## Claims

1. Heat receiver tube (1) for absorbing solar energy and for transferring absorbed solar energy to a heat transfer fluid (111) which can be located inside of at least one core tube (11) of the heat receiver tube (1), wherein
- the core tube (11) comprises a core tube surface (112) with at least one solar energy absorptive coating (1121) for absorbing solar radiation (2);
- the core tube (11) is enveloped by at least one enveloping tube (10);
- the enveloping tube (10) comprises at least one enveloping tube wall (101) which is at least partly transparent for the solar radiation (2);
- the enveloping tube wall (101) comprises at least one inner enveloping tube surface (102);
- the core tube (11) and the enveloping tube (10) are coaxially arranged to each other such that an inner heat receiver tube space (3) is formed which is bordered by the core tube surface (112) and the inner enveloping tube surface (102);
- the inner heat receiver tube space (3) comprises an inert gas (5);
- the heat receiver tube (1) comprises at least one dimension adapting device (6) with a flexible adapting device wall (60) for compensation of a thermally induced change of at least one dimension of the heat receiver tube (1);
- the enveloping tube (10) and the dimension adapting device (6) are joined together by at least one heat receiver tube skirt (103) with at least one heat receiver tube skirt wall (1031);
- the heat receiver tube skirt wall (1031) comprises at least one inlet port (4) for pouring in of at least one inert gas (5) into the inner heat receiver tube space (3);
- the inlet port (4) is sealed by an inlet port sealing (40) for inhibiting a leakage of the inert gas (5) out of the inner heat receiver tube space (4) and
- the inlet port sealing (4) comprises at least one metal (41).

2. Heat receiver tube according to claim 1, wherein the inlet port sealing (40) comprises a welding (42).

3. Heat receiver tube according to claim 1 or 2, wherein the inlet port (4) comprises an inlet port dimension (401) which is selected from the range between 0.02 mm and 1.5 mm and preferably selected from the range between 0.2 mm and 0.5 mm.

4. Heat receiver according to one of the claims 1 to 3, wherein the inert gas (5) is at least one noble gas (50) which selected from the group consisting of Krypton and Xenon.

5. Heat receiver tube according to one of the claims 1 to 4, wherein a partial pressure of the inert gas (5) in the inner heat receiver tube space (3) is selected from the range between 5 mbar and 300 mbar and preferably between 100 mbar and 200 mbar.

6. Heat receiver tube according to one of the claims 1 to 5, wherein the dimension adapting device (6) comprises bellows (61) and the flexible adapting device wall (60) comprises a bellows wall (611).

7. Heat receiver tube according to claim 6, wherein the bellows (61) are arranged at a front side (13) of the heat receiver tube (1).

8. Method for manufacturing a heat receiver tube according to one of the claims 1 to 7 with following steps:
a) Providing of at least one precursor tube of the heat receiver tube (1);
b) Arranging of at least one inlet port (4) in heat receiver tube skirt wall (1031);
c) Pouring in of at least one inert gas (5) into the inner heat receiver tube space (3) of the heat receiver tube (1); and
d) Sealing of the inlet port (4) with the aid of a sealing (40).

9. Method according to claim 8, wherein the arranging of the inlet port (4) comprises a drilling of a hole into heat receiver tube skirt wall (1031).

10. Method according to claim 8 or 9, wherein the sealing of the inlet port (4) comprises a welding.

11. Method according to claim 9 or 10, wherein for the drilling and/or for the welding at least one laser is used.

12. Method according to claim to 11, wherein for the drilling and for the welding the same laser is used.

13. Method according to one of the claims 8 to 12, wherein as precursor heat receiver tube a receiver tube is used, which is installed in a solar field (1001) of a solar thermal power plant.

14. Solar collector (1000) comprising
- at least one mirror (7) having a solar radiation (2) reflecting mirror surface (70) for directing the solar radiation (2) to a focal line (71) of the solar radiation reflecting mirror surface (70); and
- at least one heat receiver tube (1) according to one of the claims 1 to 7 which is arranged in the focal line (71) of the solar radiation reflecting mirror surface (70).

15. Solar collector according to claim 14, wherein the mirror (7) is a parabolic mirror or a Fresnel mirror.

16. Method for producing electricity by using the solar collector (1000) according to claim 15 in a solar thermal power plant for converting solar radiation (2) into electrical energy, wherein an absorbing of the solar radiation (2) is carried out with the aid of the solar collector (1000).
